# EUROPEAN PATENT SPECIFICATION

(11) **EP 1 692 944 B1**
(45) Date of publication and mention of the grant of the patent: **30.12.2009**
(21) Application number: 06075327.4
(22) Date of filing: 10.02.2006
(51) Int. Cl.: A23G 9/26, A23G 1/22, A23G 3/12

(54) **Method for manufacturing bonbons with a stalk or the like and mould applied thereby**
Verfahren zur Herstellung von Bonbons mit Stiel oder der gleichen und dazu benutzte Formen
Méthode de fabrication de bonbons à bâtonnets ou équivalent et moule utilisé dans cette méthode

(30) Priority: 16.02.2005 BE 200500082
(43) Date of publication of application: 23.08.2006
(73) Proprietor: Hamlet, Naamloze Vennootschap, 9120 Vrasene (BE)
(72) Inventor: Geltmeyer, Wim Richard, 9180 Moerbeke-Waas (BE)
(74) Representative: Donné, Eddy

(56) References cited:
- GB-A- 281 502
- US-A- 1 782 813

## Description

The present invention concerns a method for manufacturing bonbons with a stalk or the like.

In particular, the invention concerns a method for manufacturing bonbons, such as cherry liqueur chocolates, pralines, Easter eggs or the like, whereby these bonbons are provided with the stalk of a piece of fruit, a stick, a cord or the like.

A method for manufacturing such bonbons is already known, which mainly consists of briefly immersing in chocolate for example a cherry or another piece of fruit that was previously macerated in liqueur, after which the chocolate which sticks to this cherry is made to set, such that a praline is formed.

Next, a stalk or the like is immersed in chocolate with one far end, after which it is held against the bonbon with this far end, as a result of which, due to the setting of the chocolate, the stalk will adhere to the praline.

A disadvantage of this known traditional method is that it is very time-consuming and expensive.

US 1.782.813 relates to massive, frozen confections on a stick. This document does not teach to produce a hollow article wherein a filling can be provided.

GB 281.502 describes a process for making tub-shaped chocolate articles, whereby chocolate is poured over a raised portion of a mould and whereby, after said mould has been filled with chocolate, a stick is provided in the chocolate mass through a top opening in said mould. A disadvantage of this method is that the mould needs to be completely filled with chocolate in order to be able to attach the stick in this chocolate.

The present invention aims to remedy the above-mentioned and other disadvantages.

To this end, the present invention concerns a method for manufacturing bonbons according to the appended claims with a stalk or the like, whereby use is made of a mould with at least one deepened part whose wall is provided with an opening and which consists in providing a stalk or the like through the opening, such that one far end thereof still extends in the deepened part, after which a measured amount of molten chocolate or the like is poured in this deepened part and is cooled, such that, after the chocolate or the like is cast in the chocolate with its above-mentioned far end, and whereby the chocolate or the like, which is provided in the above-mentioned mould, is spread against the wall of the above-mentioned deepened part by means of a die so as to form a tub.

Such a method is advantageous in that it allows for an automation, as a result of which it can be applied in a mechanized manner on a large scale and as a result of which the production times and cost price decrease considerably, whereas a product quality comparable to that of the traditional method is obtained.

The present invention also concerns a corresponding device for manufacturing bonbons with a mould, according to the appended claims, which can be applied in a method according to the invention, in which the mould is provided with at least one deepened part whose wall is provided with an opening.

In order to better explain the characteristics of the present invention, the following method according to the invention for manufacturing bonbons with a stalk or the like is given as an example only without being limitative in any way, with reference to the accompanying drawings, in which:
figures 1 to 5 represent a method according to the invention;
figure 6 represents a bonbon which is made according to the method of the invention;
figure 7 represents a variant of a bonbon according to figure 6;
figure 8 represents a variant of a mould according to figure 1 .

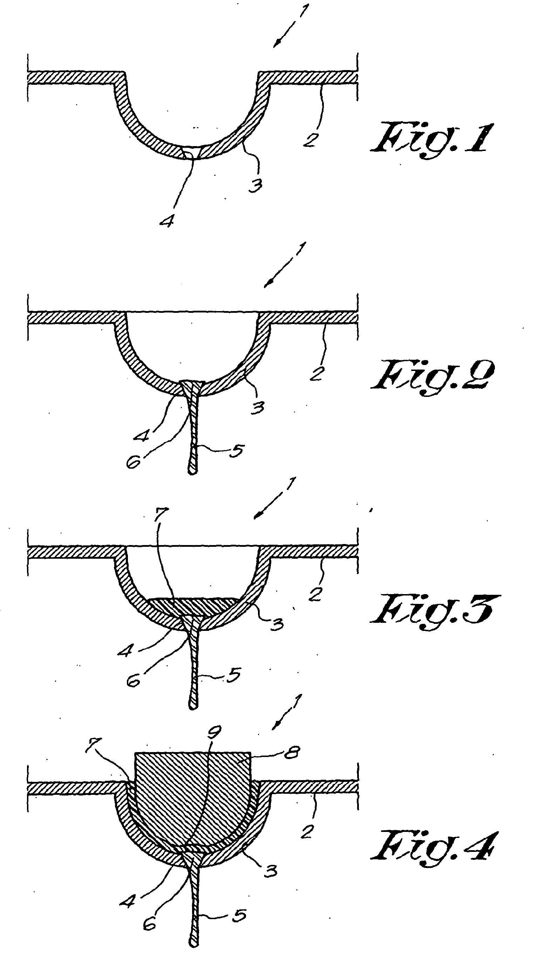

Figure 1 is a partial section of a mould 1 which can be applied in a method according to the invention, which mould 1 in this case consists of a base plate 2 in which has been provided a deepened part 3.

In the wall of the deepened part 3 is provided an opening 4, conical in this case, which extends entirely through this bottom wall and which narrows towards the outside of the mould 1.

The method according to the invention mainly consists in that a stalk 5 or the like is provided through the above-mentioned opening 4 in the above-mentioned mould 1, such that this opening 4 is sealed.

As is represented in figure 2, the above-mentioned stalk 5 can be provided with a thickening on far end 6 which is preferably larger than the above-mentioned opening 4 or which is complementary to it, and which is made practically conical in this case, such that a good sealing of the opening 4 is obtained.

The above-mentioned stalk 5 can for example be made of paper, plastic or other materials which are allowed in the food sector.

Next, as is represented in figure 3, in the mould 1, is poured a measured amount of chocolate 7 or the like.

In a following step, as is represented in figure 4, a cooled die 8 is pressed in the mould 1, such that the chocolate 1 or the like is spread against the wall of the deepened part 3 with a more or less even thickness.

The above-mentioned die 8 is preferably provided with a recess 9 which, when the die 8 is in use, is situated opposite the above-mentioned opening 4 in the mould 1, such that when the chocolate 7 is pressed on with the die 8, a layer of chocolate is formed on the thickened far end 6, whose thickness corresponds to the thickness of the chocolate layer between the die 8 and the wall of the deepened part 3.

Since the above-mentioned die 8 is cooled, the chocolate 7 will set in such a manner that a little tub is formed in which the above-mentioned stalk 5 is held, as it is cast in the chocolate with its far end 6.

Next, a filling is provided in the above-mentioned tub, such as a crème, a syrup, a piece of fruit, caramel or the like.

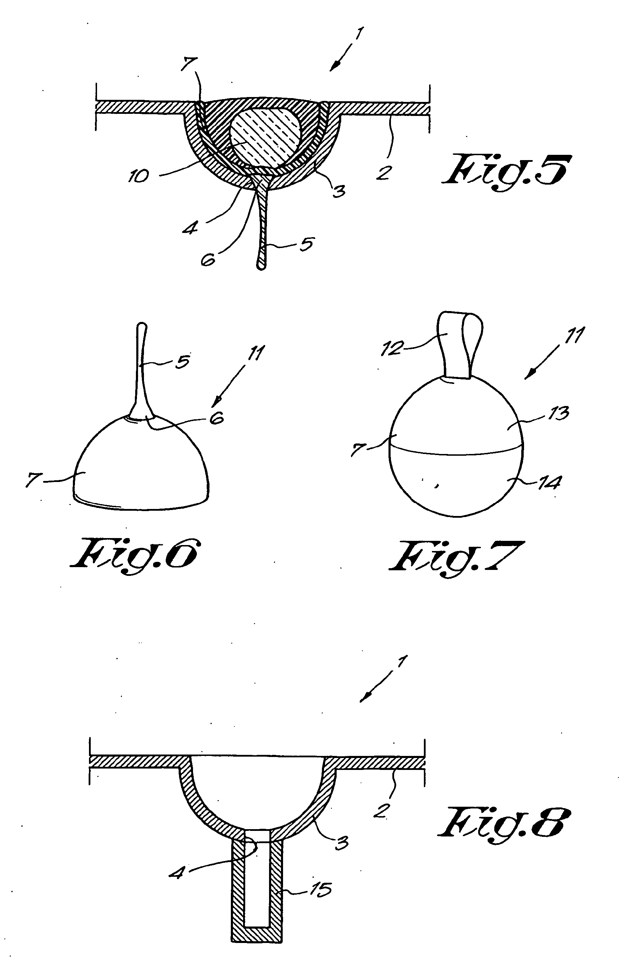

In the case of figure 5, for example, a cherry 10 is provided in the above-mentioned tub, after which the rest of the tub is filled with for example chocolate.

Thus, after everything has set, a bonbon 11 is formed which is provided with a stalk, as is represented in figure 6 and 15, which can then be removed from the mould 1.

Figure 7 represents a variant of a bonbon 11 which is obtained by means of a method according to the invention.

In this case, the bonbon 11 is made in the shape of a chocolate egg, which is provided with an appendage in the shape of a little ribbon 12, both far ends of which are held in the chocolate.

To manufacture such a bonbon 11, a half egg 13 is made according to the method as described above, and a second half egg 14 is formed in a known mould without opening, after which these two halves are melted together so as to form an egg.

Figure 8 represents a variant of a mould 1 which can be applied in a method according to the invention, whereby the above-mentioned opening 4 in the deepened part 3 is covered on one side by means of a holder 15 for the stalk 5 or the like.

The method for manufacturing bonbons by means of such a mould is analogous to the one described above.

However, such a variant is advantageous in that the chocolate which runs through the opening 4, along the stalk 5 or the like, ends up in the holder 15 and is not lost.

Another advantage thereof is that, by means of the above-mentioned holder 15, the stalk 5 is positioned in the right place.

Naturally, all sorts of bonbons can be made with a method according to the invention, and it is not restricted to the use of chocolate, but it also allows to manufacture bonbons made of other materials, such a for example sugar.

It is also clear that the above-mentioned stalk 5 or the like, which is provided on a bonbon 11 which is obtained with a method according to the invention, can be made in all sorts of different shapes, such as for example in the shape of a little cord, liquorice or the like.

The present invention is by no means limited to the embodiment given as an example and represented in the accompanying drawings; on the contrary, such a method according to the invention for manufacturing bonbons with a stalk or the like and a mould applied thereby, can be made in all sorts of shapes and dimensions.

## Claims

1. Method for manufacturing bonbons with a stalk or the like, whereby use is made of a mould (1) with at least one deepened part (3) whose wall is provided with an opening (4) and whereby a stalk (5) or the like is provided through the opening (4), such that one far end (6) thereof still extends in the deepened part (3), **characterized in that** after providing said stalk through said opening a measured amount of molten chocolate (7) or the like is poured in this deepened part (3) and is cooled, such that, after the chocolate (7) or the like has set, a bonbon (11) is formed in which the above-mentioned stalk (5) or the like is cast in the chocolate (7) with the above-mentioned far end (6), and such that the chocolate (7) or the like, which is provided in the above-mentioned mould (1) , is spread against the wall of the above-mentioned deepened part (3) by means of a die (8) so as to form a tub.

2. Method according to claim 1, **characterized in that** the above-mentioned stalk (5) or the like seals the above-mentioned opening (4).

3. Method according to claim 1 or 2, **characterized in that** the far end (6) of the above-mentioned stalk (5) is provided with a thickening which is larger than the above-mentioned opening (4).

4. Method according to claim 1, **characterized in that** the above-mentioned die is a cooled die.

5. Method according to claim 1, **characterized in that** the above-mentioned die (8) is provided with a recess (9) which, when the die (8) is in use, is situated opposite the above-mentioned opening. (4) in the mould (1).

6. Method according to claim 1, **characterized in that** in the above-mentioned tub is provided a filling in the form of a crème, a syrup, a piece of fruit (10), caramel or the like.

7. Method according to claim 1, **characterized in that** the bonbon is provided with a little ribbon, a little cord or the like.

8. A device for manufacturing bonbons with a stalk or the like, for use in a method according to one or several of the preceding claims, said device comprising:
the combination of a mould (1) comprising at least a deepened part (3) whose wall is provided with an opening (4) and a stalk (5) which can be provided through said opening such that one far end (6) thereof still extends in the deepened part (3) of said mould, means for pouring chocolate or the like such that a measured amount of chocolate or the like (7) can be poured in said deepened part (3) of the mould (1) and can be cooled such that after the chocolate or the like has set, a bonbon (11) is formed in which the above-mentioned stalk (5) or the like is cast in the chocolate (7) with the above-mentioned far end (6), and a die (8), by means of which the chocolate (7) or the like which can be provided in said mould (1), can be spread against the wall of the above mentioned deepened-part (3) so as to form a tub.

9. Mould according to claim 8, **characterized in that** it is provided with a continuous conical opening (4) which narrows towards the outside of the mould (1).

10. Mould according to claim 8 or 9, **characterized in that** the above-mentioned opening (4) is covered on one side in the deepened part (3) by means of a holder (15) for the stalk (5) or the like.

## Patentansprüche

1. Verfahren zur Herstellung von Bonbons mit einem Stiel oder dergleichen, wobei eine Gussform (1) mit mindestens einem vertieften Teil (3) verwendet wird, dessen Wand mit einer Öffnung (4) versehen ist, und wobei ein Stiel (5) oder dergleichen durch die Öffnung (4) angebracht wird, sodass ein Ende (6) davon sich noch in dem vertieften Teil (3) erstreckt, **dadurch gekennzeichnet, dass** nach dem Anbringen des Stiels durch besagte Öffnung eine abgemessene Menge geschmolzene Schokolade (7) oder dergleichen in diesen vertieften Teil (3) gegossen wird und abgekühlt wird, derart, dass nach dem Erstarren der Schokolade (7) oder dergleichen ein Bonbon (11) gebildet ist, worin der vorgenannte Stiel (5) oder dergleichen mit dem vorgenannten Ende (6) in die Schokolade (7) eingegossen ist, und derart, dass die Schokolade (7) oder dergleichen, die in der vorgenannten Gussform (1) angebracht ist, mit einem Stempel (8) gegen die Wand des vorgenannten vertieften Teils (3) ausgebreitet wird, um eine Wanne zu bilden.

2. Verfahren nach Anspruch 1, **dadurch gekennzeichnet, dass** der vorgenannte Stiel (5) oder dergleichen die vorgenannte Öffnung (4) abschließt.

3. Verfahren nach Anspruch 1 oder 2, **dadurch gekennzeichnet, dass** das Ende (6) des vorgenannten Stiels (5) mit einer Verdickung versehen ist, die größer als die vorgenannte Öffnung (4) ist.

4. Verfahren nach Anspruch 1, **dadurch gekennzeichnet, dass** der vorgenannte Stempel ein gekühlter Stempel ist.

5. Verfahren nach Anspruch 1, **dadurch gekennzeichnet, dass** der vorgenannte Stempel (8) mit einer Ausnehmung (9) versehen ist, die, wenn der Stempel (8) in Gebrauch ist, sich gegenüber der vorgenannten Öffnung (4) in der Gussform (1) befindet.

6. Verfahren nach Anspruch 1, **dadurch gekennzeichnet, dass** in der vorgenannten Wanne eine Füllung in Form einer Creme, eines Sirups, einer Frucht (10), Karamell oder dergleichen angebracht wird.

7. Verfahren nach Anspruch 1, **dadurch gekennzeichnet, dass** das Bonbon mit einem Bändchen, einem Schnürchen oder dergleichen versehen wird.

8. Vorrichtung zur Herstellung von Bonbons mit einem Stiel oder dergleichen, zur Anwendung in einem Verfahren nach einem oder mehreren der vorgenannten Ansprüche, wobei die Vorrichtung umfasst: die Kombination einer Gussform (1), die mindestens einen vertieften Teil (3) umfasst, dessen Wand mit einer Öffnung (4) versehen ist, und eines Stiels (5), der durch besagte Öffnung angebracht werden kann, sodass ein Ende (6) davon sich noch in dem vertieften Teil (3) der besagten Gussform erstreckt, Mittel zum Gießen von Schokolade oder dergleichen, sodass eine abgemessene Menge Schokolade oder dergleichen (7) in den besagten vertieften Teil (3) der Gussform (1) gegossen werden kann und abgekühlt werden kann, sodass nach dem Erstarren der Schokolade oder dergleichen ein Bonbon (11) gebildet ist, worin der vorgenannte Stiel (5) oder dergleichen mit dem vorgenannten Ende (6) in die Schokolade (7) eingegossen ist, und eines Stempels (8), mittels dessen die Schokolade (7) oder dergleichen, die in der besagten Gussform (1) angebracht werden kann, gegen die Wand des vorgenannten vertieften Teils (3) ausgebreitet werden kann, um eine Wanne zu bilden.

9. Gussform nach Anspruch 8, **dadurch gekennzeichnet, dass** sie mit einer durchlaufenden konischen Öffnung (4) versehen ist, die sich zur Außenseite der Gussform (1) hin verengt.

10. Gussform nach Anspruch 8 oder 9, **dadurch gekennzeichnet, dass** die vorgenannte Öffnung (4) an einer Seite in dem vertieften Teil (3) mittels einer Halterung (15) für den Stiel (5) oder dergleichen abgedeckt wird.

## Revendications

1. Procédé pour fabriquer des bonbons comprenant un bâtonnet ou analogue, par lequel il est fait usage d'un moule (1) comprenant au moins une partie approfondie (3) dont la paroi est munie d'une ouverture (4) et par lequel on fait passer un bâtonnet (5) ou analogue à travers l'ouverture (4) de telle sorte qu'une extrémité éloignée (6) de ce dernier s'étend toujours dans la partie approfondie (3), **caractérisé en ce que**, après avoir fait passer ledit bâtonnet à travers ladite ouverture, on verse une quantité mesurée de chocolat fondu (7) ou analogue dans cette partie renfoncée (3) et on la refroidit, de telle sorte que, après la prise du chocolat (7) ou analogue, on obtient un bonbon (11) dans lequel le bâtonnet susmentionné (5) ou analogue est coulé dans le chocolat (7) avec l'extrémité éloignée susmentionnée (6), et de telle sorte que le chocolat (7) ou analogue, qui est fourni dans le moule susmentionné (1), est étalé contre la paroi de la partie approfondie susmentionnée (3) au moyen d'une matrice (8) de façon à former une barquette.

2. Procédé selon la revendication 1, **caractérisé en ce que** le bâtonnet susmentionné (5) ou analogue ferme hermétiquement l'ouverture susmentionnée (4).

3. Procédé selon la revendication 1 ou 2, **caractérisé en ce que** l'extrémité éloignée (6) du bâtonnet susmentionné (5) est muni d'une épaisseur qui est plus grande que l'ouverture susmentionnée (4).

4. Procédé selon la revendication 1, **caractérisé en ce que** la matrice susmentionnée est une matrice refroidie.

5. Procédé selon la revendication 1, **caractérisé en ce que** la matrice susmentionnée (8) est munie d'un évidement (9) qui, en état de marche de la matrice (8), est situé à l'opposé de l'ouverture susmentionnée (4) dans le moule (1).

6. Procédé selon la revendication 1, **caractérisé en ce qu'**on prévoit dans la barquette susmentionnée, une fourrure sous la forme d'une crème, d'un sirop, d'un morceau de fruit (10), d'un caramel ou analogue.

7. Procédé selon la revendication 1, **caractérisé en ce que** le bonbon est muni d'un petit ruban, d'un petit cordon ou analogue.

8. Dispositif pour fabriquer des bonbons comprenant un bâtonnet ou analogue, à utiliser dans un procédé selon une ou plusieurs des revendications précédentes, ledit dispositif comprenant : la combinaison d'un moule (1) comprenant au moins une partie approfondie (3) dont la paroi est munie d'une ouverture (4) et d'un bâtonnet (5) que l'on peut faire passer à travers ladite ouverture de telle sorte qu'une extrémité éloignée (6) dudit bâtonnet s'étend toujours dans la partie approfondie (3) dudit moule, d'un moyen pour verser du chocolat ou analogue de telle sorte qu'on puisse verser une quantité mesurée de chocolat (7) ou analogue dans ladite partie renfoncée (3) et de telle sorte qu'on puisse le refroidir, si bien que, après la prise du chocolat (7) ou analogue, on obtient un bonbon (11) dans lequel le bâtonnet susmentionné (5) ou analogue est coulé dans le chocolat (7) avec l'extrémité éloignée susmentionnée (6), et d'une matrice (8) au moyen de laquelle le chocolat (7) ou analogue, qui peut être fourni dans ledit moule (1), peut s'étaler contre la paroi de la partie approfondie susmentionnée (3) de façon à former une barquette.

9. Moule selon la revendication 8, **caractérisé en ce qu'**il est muni d'une ouverture conique continue (4) qui se rétrécit en direction de l'extérieur du moule (1).

10. Moule selon la revendication 8 ou 9, **caractérisé en ce que** l'ouverture susmentionnée (4) est recouverte, d'un côté, dans la partie approfondie (3), au moyen d'un support (15) pour le bâtonnet (5) ou analogue.
